Europäisches Patentamt

European Patent Office

Office européen des brevets

(19)

(11) Numéro de publication: **0 077 531**

**A1**

(12) **DEMANDE DE BREVET EUROPEEN**

(21) Numéro de dépôt: **82109505.6**

(22) Date de dépôt: **14.10.82**

(51) Int. Cl.³: **H 02 J 7/34**
**H 02 J 9/06**

(30) Priorité: **20.10.81 FR 8119648**

(43) Date de publication de la demande:
**27.04.83 Bulletin 83/17**

(84) Etats contractants désignés:
**AT BE CH DE FR GB IT LI LU NL SE**

(71) Demandeur: **Société Anonyme dite SAFT**
**156, avenue de Metz**
**F-93230 Romainville(FR)**

(72) Inventeur: **Billot, Michel**
**9, rue de l'Avant Garde**
**F-93700 Drancy(FR)**

(72) Inventeur: **Godard, Pierre**
**32, sixième Avenue**
**F-93290 Tremblay les Gonesse(FR)**

(74) Mandataire: **Weinmiller, Jürgen et al,**
**Zeppelinstrasse 63**
**D-8000 München 80(DE)**

(54) **Dispositif de charge d'un ensemble de batteries, notamment de batteries tampons alimentées par une source d'énergie de puissance limitée.**

(57) Le dispositif de charge comporte un chargeur (Ch) et des batteries ($B_1$ à $B_n$) branchées en parallèle sur un circuit d'utilisation (1) par l'intermédiaire de diodes (D, $D_1$ à $D_n$). Chaque batterie est en série avec un shunt (Sh) auquel est associé un dispositif de contrôle de l'état de charge (4) lequel est relié à une entrée ($A_1$ à $A_n$) d'un séquenceur (S). Le séquenceur a une sortie de commande (Ao) reliée au chargeur et commande les thyristors d'un pont redresseur du chargeur. Le séquenceur comporte des contacts ($C_1$ à $C_n$) insérés chacun entre une polarité du chargeur et une polarité de même signe d'une batterie pour charger ladite batterie à travers le shunt qui lui est associé.

<u>Dispositif de charge d'un ensemble de batteries, notamment de batteries</u>
<u>tampons alimentées par une source d'énergie de puissance limitée</u>

L'invention concerne un dispositif de charge d'un ensemble de batteries, notamment de batteries tampons branchées en parallèle et reliées à un chargeur alimenté par une source d'énergie de puissance limitée. Un circuit d'utilisation normalement alimenté par le chargeur est alimenté, en cas de panne de la source d'énergie, par l'ensemble de batteries dont la capacité est prévue pour alimenter le circuit d'utilisation pendant un temps suffisant pour attendre que la source d'énergie puisse à nouveau alimenter normalement le circuit d'utilisation. Il est nécessaire alors de recharger les batteries le plus rapidement possible afin qu'elles puissent être à même de remplir leur fonction de secours en cas de nouvelle défaillance de la source d'énergie. La charge d'une batterie d'accumulateurs, notamment d'accumulateur alcalins, demande une intensité de charge suffisamment élevée pour obtenir un rendement correct ainsi qu'une restitution convenable de capacité en décharge. Le bon rapport courant de charge/capacité est de l'ordre de 0,1 à 0,2, ce qui donne une durée de charge complète, compte tenu du rendement comprise entre 7 et 14 heures. Si l'on utilise, par exemple un ensemble de batteries ayant une capacité de 4000 ampères-heures pour alimenter une utilisation absorbant un courant de 10 ampères sous une tension continue de 30 volts, la recharge de cet ensemble de batteries nécessite un courant d'au moins 400 ampères, c'est-à-dire au moins égal au dixième de la capacité de l'ensemble de batteries ; ceci conduit à une source d'énergie, et à un chargeur, d'une puissance d'au moins 12 kilowatts, alors qu'en fonctionnement normal la source d'énergie et le chargeur ne délivrent qu'une puissance de 300 watts à l'utilisation. Le dimensionnement de la source d'énergie et du chargeur est donc fonction du courant de charge de l'ensemble de batteries, ce qui conduit à surdimensionner considérablement la source d'énergie et le chargeur par rapport à la puissance nécessaire pour alimenter le seul circuit d'utilisation, et augmente notablement le coût et le volume du chargeur et de la source d'énergie lorsqu'elle est constituée par exemple par un groupe électrogène.

L'invention a pour but d'assurer la recharge d'un ensemble de batteries par une source d'énergie de puissance limitée et un chargeur de faible puissance, celle-ci étant très notablement inférieure à la puissance nécessaire pour recharger l'ensemble de batteries.

La présente invention à pour objet un dispositif de charge d'un ensemble de batteries, notamment de batteries tampons, alimentées par une source d'énergie de puissance limitée par l'intermédiaire d'un chargeur ledit ensemble de batteries étant constitué de batteries en parallèles reliées d'une part à un circuit d'utilisation, et d'autre part au chargeur alimentant ledit circuit d'utilisation, caractérisé par le fait que chaque batterie a une polarité reliée au circuit d'utilisation par l'intermédiaire d'une diode, qu'une polarité du chargeur, de même signe que la polarité des batteries reliées au circuit d'utilisation par une diode, est reliée au circuit d'utilisation par une diode, qu'un dispositif de contrôle de l'état de charge d'une batterie est associé à chaque batterie à l'aide d'un shunt connecté en série avec ladite batterie, que ledit dispositif de contrôle de l'état de charge est relié à une entrée d'un séquenceur, et que ledit séquenceur a une sortie de commande reliée au chargeur et un contact à fermeture inséré entre la polarité du chargeur reliée par une diode au circuit d'utilisation et la polarité de même signe de chaque batterie pour charger ladite batterie à travers le shunt qui lui est associé.

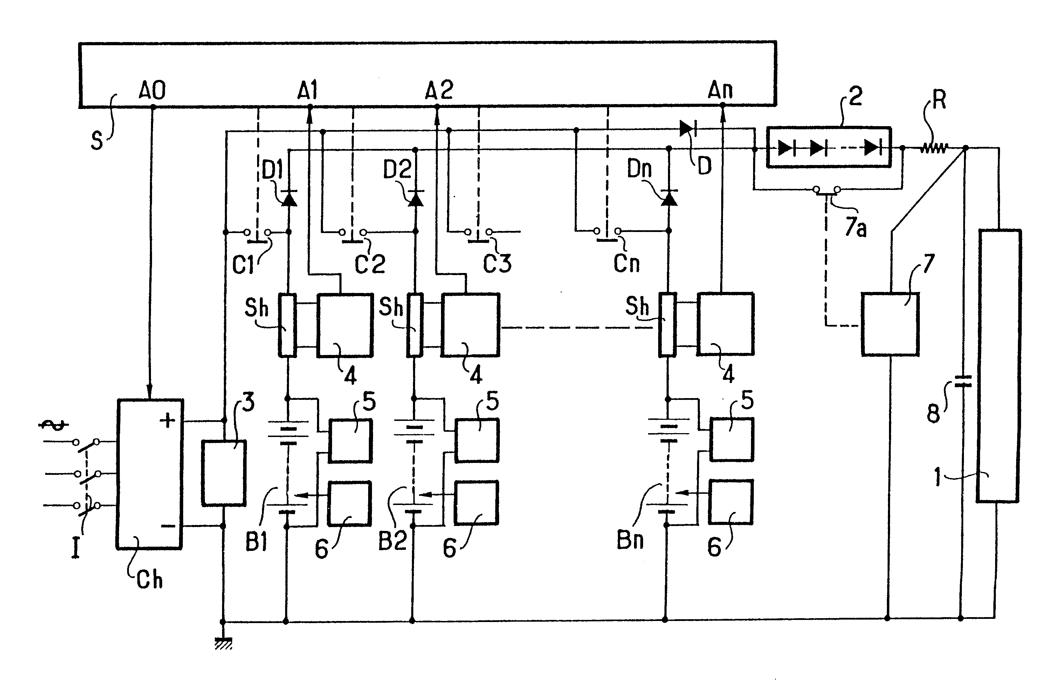

L'invention sera bien comprise à l'aide de la description qui va suivre d'un exemple de réalisation illustré par la figure unique.

Dans la figure unique un chargeur Ch est alimenté par une source électrique alternative, groupe électrogène par exemple, par l'intermédiaire d'un interrupteur I. Le chargeur est de tout type connu et comporte un pont redresseur à thyristors ; généralement le pont redresseur est mixte et est constitué de diodes et de thyristors. Le chargeur alimente un circuit d'utilisation 1 à travers un ensemble de diodes 2 en série avec une résistance R. Dans la figure la polarité positive du chargeur est reliée par une diode D à l'ensemble de diodes 2. Des batteries $B_1$, $B_2$,...$B_n$ sont chacune en série avec un shunt Sh, et une diode $D_1$, $D_2$,...$D_n$, respectivement ; dans le cas de la figure le shunt et la diode associés à chaque batterie sont connectés entre la polarité positive de la batterie et l'ensemble de diodes 2, et la polarité négative de chaque batterie est reliée à la polarité négative du chargeur. Un dispositif de surveillance de la tension continue 3 est branché entre les polarités positive et négative du chargeur. Un dispositif de contrôle de l'état de charge 4 est branché aux bornes de chaque shunt Sh. Ce dispositif de contrôle est de type connu ; il s'agit par exemple d'un dispositif de temporisation proportionnelle à la capacité fournie par la batterie en décharge et comportant un élément mémoire (accumulateur) qui se charge proportionnellement au courant fourni par la batterie et qui se décharge ensuite à courant constant et commande la charge rapide tant qu'il n'est pas déchargé.

Chaque dispositif de contrôle de l'état de charge 4 des batteries $B_1$, ...$B_n$, est relié à une entrée $A_1$, $A_2$, $A_n$, respectivement, d'un séquenceur S dont une sortie de commande Ao est reliée au chargeur et sert à la commande des thyristors du pont redresseur.

Un dispositif de contrôle de la tension 5 est branché aux bornes de chaque batterie et sert à surveiller la tension et à fournir une signalisation lorsque la tension de la batterie descend en-dessous d'une certaine valeur. De même chaque batterie comporte un détecteur de niveau d'électrolyte 6, qui fonctionne en présence de la source alternative. Un dispositif à minimum et maximum de tension 7 est branché aux bornes du circuit d'utilisation et comporte un contact 7a, à ouverture, en parallèle sur l'ensemble de diodes 2. Un condensateur 8 est branché en parallèle sur le circuit d'utilisation 1.

Le séquenceur S est par exemple de type électromécanique, et par exemple du type 88645 de la Société CROUZET. Il comporte un contacteur de charge par batterie et un ensemble de circuits assurant l'enclenchement et le déclenchement successif des contacteurs de charge. Chaque contacteur de charge comporte un contact $C_1$, $C_2$, $C_3$, ...$C_n$, à fermeture. Le contact $C_1$ est connecté entre la polarité positive du chargeur et un point commun à la diode $D_1$ et au shunt Sh associé à la batterie $B_1$. Le contact $C_2$ est connecté entre la polarité positive du chargeur et un point commun à la diode $D_2$ et au shunt Sh associé à la batterie $B_2$ ; le contact $C_n$ est connecté entre la polarité positive du chargeur et un point commun à la diode $D_n$ et au shunt associé à la batterie $B_n$.

Le fonctionnement de l'ensemble est le suivant.

Le circuit d'utilisation 1 est normalement alimenté par la source alternative par l'intermédiaire du chargeur Ch dont le signal de commande des thyristors est réglé pour obtenir la tension désirée aux bornes du circuit d'utilisation ; l'ensemble de diodes 2 est alors court-circuité par le contact 7a. Lorsque la source alternative est en défaut, le circuit d'utilisation 1 est alimenté par les batteries $B_1$, $B_2$,...$B_n$, et les dispositifs de contrôle de l'état de charge 4, associés à chaque batterie, mesurent la quantité d'électricité délivrée par chaque batterie. Lorsque la source de tension alternative est de nouveau en état d'alimenter le circuit d'utilisation par l'intermédiaire du chargeur, les dispositifs de contrôle de l'état de charge indiquent au séquenceur S que les batteries se sont déchargées. Le séquenceur S commande la fermeture du contact $C_1$ puis délivre, par sa sortie de commande Ao, un signal de commande aux thyristors du pont redresseur du chargeur ce qui a pour effet d'augmenter la tension continue de sortie du chargeur. Le dispositif à minimum et maximum de tension 7 détecte une tension maximum et commande l'ouverture du contact 7a, introduisant l'ensemble de diodes 2 en série dans l'alimentation du circuit d'utilisation 1 ; la tension aux bornes du circuit d'utilisation baisse, mais tant qu'elle ne descend pas au dessous d'une certaine valeur, le contact 7a reste ouvert. Le contact $C_1$ étant fermé la batterie $B_1$ est reliée aux bornes du chargeur qui la charge à travers la shunt Sh ; le dispositif de contrôle de l'état de charge 4, associé au shunt Sh en série avec la batterie $B_1$, qui a initialement enregistré la quantité d'électricité fournie par la batterie, autorise une charge au palier haut proportionnelle à ladite quantité. Le séquenceur commande successivement la charge des batteries, chaque batterie étant chargée pendant un certain temps, identique pour toutes les batteries. Si l'on a par exemple huit batteries, le séquenceur commandera la charge des batteries pendant trois heures chacune. Si après un cycle de charge, c'est-à-dire après 24 heures, les dispositifs de contrôle de l'état de charge 4 n'indiquent pas que les batteries sont chargées , ce qui signifie que trois heures de charge n'ont pas suffi à recharger chaque batterie, le séquenceur reçoit un signal desdits dispositifs et commande un nouveau cycle de charge de trois heures par batterie. La charge des batteries se poursuit de la même manière tant que les dispositifs de contrôle de l'état de charge

- 5 -

0077531

délivrent un signal.

Lorsque le temps de charge de trois heures est écoulé, pour la batterie $B_1$, le séquenceur S commande successivement et dans l'ordre, l'arrêt du chargeur par suppression du signal de commande des thyristors, l'ouverture du contact $C_1$, la fermeture du contact $C_2$, la remise en marche du chargeur en délivrant de nouveau un signal de commande des thyristors.

Ce cycle de manoeuvre est répété à chaque fois que l'on passe, pour la charge, d'une batterie à la suivante, ce qui permet des ouvertures et des fermetures des contacts $C_1$, $C_2$...$C_n$, sans courant en provenance du chargeur.

Lorsque toutes les batteries sont chargées, le séquenceur ne donne plus d'ordre de fonctionnement au palier haut de tension : le chargeur fonctionne alors avec un signal de commande fourni par un circuit de commande interne au chargeur de manière à obtenir en sortie du chargeur la tension continue normale d'alimentation du circuit d'utilisation ; le contact 7a étant ouvert, la tension aux bornes du circuit d'utilisation tombe en-dessous d'une valeur minimale qui est détectée par le dispositif à minimum et maximum de tension 7 qui commande alors la fermeture du contact 7a, lequel court-circuite l'ensemble de diodes 2 ; la tension normale délivrée par le chargeur est appliquée au circuit d'utilisation, la résistance R étant de faible valeur et ayant pour but de limiter le courant de charge du condensateur 8.

Les batteries étant chargées, le chargeur alimente le circuit d'utilisation ; un chargeur d'entretien, non représenté, assure alors le courant d'entretien des batteries $B_1$ à $B_n$.

Bien entendu ce chargeur d'entretien est alimenté par la source électrique alternative qui alimente le chargeur Ch, et fonctionne en permanence en présence d'alternatif.

Le séquenceur peut également être de type électronique, et les contacteurs, avec leur contact, $C_1$, $C_2$...$C_n$, remplacés par des thyristors ; le séquenceur commande alors successivement la gâchette de chaque thyristor, ce qui rend chaque thyristor passant à son tour, et permet la charge de la batterie associée ; lorsque le séquenceur ne délivre plus de signal de commande au thyristor celui-ci cesse d'être conducteur, le chargeur étant à l'arrêt, comme décrit ci-dessus.

Bien entendu l'invention n'est pas limitée au mode de réalisation illustré par la figure annexée et l'on pourra remplacer tout moyen ou toute disposition par un moyen ou une disposition équivalent. Ainsi on pourra relier la polarité négative du chargeur Ch et des batteries à l'utilisation 1 par l'intermédiaire de diodes, au lieu de la polarité positive, chaque contact $C_1$ à $C_n$ étant alors connecté entre la polarité négative de la batterie auquel il est associé et la polarité négative du chargeur ; les polarités positives du chargeur et des batteries sont alors reliées directement entre elles et reliées à l'ensemble de diodes 2.

L'invention d'applique à la charge de batteries tampons alimentées par une source d'énergie de puissance limitée, que cette source soit un réseau de faible puissance ou un groupe électrogène.

REVENDICATIONS

1/ Dispositif de charge d'un ensemble de batteries, notamment de batteries tampons, alimentées par une source d'énergie de puissance limitée par l'intermédiaire d'un chargeur (Ch) ledit ensemble de batteries étant constitué de batteries ($B_1$, $B_2$,...$B_n$) en parallèles reliées d'une part à un circuit d'utilisation (1), et d'autre part au chargeur (Ch) alimentant ledit circuit d'utilisation, caractérisé par le fait que chaque batterie a une polarité reliée au circuit d'utilisation par l'intermédiaire d'une diode ($D_1$ à $D_n$), qu'une polarité du chargeur, de même signe que la polarité des batteries reliées au circuit d'utilisation par une diode, est reliée au circuit d'utilisation par une diode (D), qu'un dispositif de contrôle de l'état de charge (4) d'une batterie est associé à chaque batterie à l'aide d'un shunt (Sh) connecté en série avec ladite batterie, que ledit dispositif de contrôle de l'état de charge est relié à une entrée ($A_1$ à $A_n$) d'un séquenceur (S), et que ledit séquenceur a une sortie de commande (Ao) reliée au chargeur et un contact ($C_1$, $C_2$,...$C_n$) à fermeture inséré entre la polarité du chargeur reliée par une diode au circuit d'utilisation et la polarité de même signe de chaque batterie pour charger ladite batterie à travers le shunt qui lui est associé.

2/ Dispositif de charge selon la revendication 1, caractérisé par le fait que les batteries et le chargeur alimentent le circuit d'utilisation à travers un ensemble de diodes (2) et qu'un dispositif à minimum et à maximum de tension (7) est connecté aux bornes du circuit d'utilisation (1) ledit dispositif ayant un contact (7a) à ouverture branchée en parallèle sur l'ensemble de diodes (2).

3/ Dispositif selon la revendication 1, caractérisé par le fait que chaque contact ($C_1$ à $C_n$) est un thyristor.

4/ Dispositif selon la revendication 1, caractérisé par le fait que pour connecter une batterie à charger au chargeur, le séquenceur (S) commande d'abord l'arrêt du chargeur (Ch), par suppression sur la sortie de commande (Ao) d'un signal de commande, puis la déconnexion d'une batterie venant d'être chargée par l'ouverture du contact la reliant au chargeur, et ensuite la connexion de la batterie à charger par fermeture du contact la reliant au chargeur.

0077531

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl. ³) |
|---|---|---|---|
| | --- | | H 02 J 7/34 |
| A | US-A-3 483 393 (A.N.GUTZMER et al.) *Colonne 1, lignes 52-62; colonne 4, ligne 31 - colonne 6, ligne 7; figure* | 1 | H 02 J 9/06 |
| | --- | | |
| A | FR-A-2 347 809 (SAFT) *Page 2, ligne 25 - page 4, ligne 15; figure 1* | 1 | |
| | --- | | |
| A | IBM TECHNICAL DISCLOSURE BULLETIN, vol. 18, no. 3, août 1975, pages 800,801, New York (USA); F.G.YOUNG: "Buffered power supply". *En entier* | 1,4 | |
| | --- | | **DOMAINES TECHNIQUES RECHERCHES (Int. Cl. ³)** |
| A | FR-A-2 126 676 (BURROUGHS CORP.) *Page 3, lignes 3-22; page 4, lignes 3-21; figure 1* | 1 | H 02 J 7/00 H 02 J 9/00 |
| | --- | | |
| A | FR-A-2 050 613 (SAFT) *Page 2, ligne 24 - page 8, ligne 28; figures 1,2* | 1 | |
| | ----- | | |

Le présent rapport de recherche a été établi pour toutes les revendications

| Lieu de la recherche | Date d'achèvement de la recherche | Examinateur |
|---|---|---|
| LA HAYE | 21-01-1983 | POINT A.G.F. |